# EUROPEAN PATENT APPLICATION

(11) **EP 4 478 654 A1**
(43) Date of publication of application: **18.12.2024**
(21) Application number: 23315248.7
(22) Date of filing: 15.06.2023
(51) Int. Cl.: H04L 9/00, G06F 21/60

(54) **METHOD OF SECURELY PERFORMING A PROCESSING OPERATION AND A FUNCTION IN THE HOMOMORPHIC DOMAIN**

(71) Applicant: THALES DIS FRANCE SAS, 92190 Meudon (FR)
(72) Inventor: Demarty, Joel, 92190 Meudon (FR); Cogliati, Benoit Michel, 92190 Meudon (FR)
(74) Representative: Bricks, Amélie

(57) **Abstract**

The present invention relates to a method of secure performing, by a system comprising a processing unit and a secure element and on request by a requesting device, at least one processing operation and a function whose execution by the processing unit in the homomorphic domain does not fulfill a predetermined criteria,
said method comprising :
-performing (S1), by said processing unit, said at least one processing operation, in the homomorphic domain, on data encrypted using a homomorphic encryption algorithm, to generate first ciphertexts,
- determining (S2) by said processing unit that execution of said function taking as inputs said first ciphertexts is to be outsourced to said secure element,
- sending (S3) to said secure element said generated first ciphertexts and said function,
- decrypting (S4) said first ciphertexts into first cleartexts by said secure element,
- applying (S5) said function to said first cleartexts by said secure element to generate a second cleartext.

## Description

### FIELD OF THE INVENTION

The present invention relates to the field of secure computation in a whitebox environment and more particularly to methods and devices for an efficient implementation of computation in the homomorphic domain.

### BACKGROUND OF THE INVENTION

A first application of cryptography is to provide mechanisms to protect data, such as messages exchanged on a communication channel, from being accessed by an unauthorized user. A plaintext piece of data may be protected by converting it into a ciphertext that may only be deciphered, i.e., converted back into the original data by someone or some device owning a secret key required for performing the deciphering operation.

A drawback of such an encryption of a sensitive data into an encrypted data is that usually the encrypted data must be deciphered before any computation may be performed using the sensitive data. Therefore, such sensitive data is efficiently protected by encryption during its storage or its transfer from one entity to another, but it may not be protected when it shall be used as an input to any operation.

Public key cryptography can also be used for authenticating the issuer of a message. Such an issuer can generate a signature based on said message using his private key. The recipient of the message can then use the public key of the alleged issuer for verifying that the signature was generated using the associated private key ie that the issuer of the message is indeed who he claims to be. An example of widely used public key cryptosystem is Rivest-Shamir-Adelman (RSA) cryptosystem.

Of course, user sensitive data, secret key or private key must remain secret, otherwise an attacker may use sensitive data for fraudulent purposes such as stealing digital money or generating forged signatures of a message as if he was the true owner of the private key.

Traditionally, in order to ensure that the secret/private key and sensitive data remain secret, the decryption or signature algorithm or any other operation using a sensitive data as input is supposed to be executed in a secure environment only. The device executing such an algorithm is assumed trusted, preventing any attacker from accessing either the secret/private key or the sensitive data itself. This is referred to as black box cryptography. Hardware security modules (HSM) may for example be used for performing sensitive computations.

However, operations using as input sensitive data and cryptographic processes are more and more deployed in applications executed on open devices that cannot be fully trusted. For example, many user devices now have access to the Internet, such as PCs, tablets, smartphones, and may be used for performing banking operations handling sensitive banking information or for playing copyrighted digital content such as audio or video files which may be cryptographically protected, for example using digital rights management (DRM) files, in order to make it available to a user only as long as the user as subscribed to an online multimedia streaming service.

Cryptographic processes are then executed in an environment where not all users or devices can be trusted. Such a context is usually called a white-box attack context. In such a context, sensitive data such as private keys, are vulnerable to attacks since the attacker has full access to the software implementation of the cryptographic processes. Binary code of such processes is completely accessible and editable by the attacker that can analyze the binary code of the cryptography application and, for example, memory pages or registers used for temporary storage during the execution. Such manipulation may, for example, be performed using debuggers and hardware emulation tools.

In order to make a trusted environment available in untrusted devices, secure elements (SE) may be integrated in such devices. Nevertheless, a major drawback of secure elements is their much lower resources than those of the untrusted device hosting it, both in terms of computational power and memory.

A very powerful cryptography mechanism, known as homomorphic encryption (HE), was first theoretically proposed by Rivest *et al.* in 1978 (R. L. Rivest, L. Adleman, and M. L. Dertouzos. On data banks and privacy homomorphisms. In Foundations of Secure Computation, 1978) and the first practical generic solution for fully homomorphic encryption was discovered by Craig Gentry in 2009 in [Gentry] Fully Homomorphic Encryption Using Ideal Lattices, in Proceedings of the forty-first annual ACM symposium on Theory of computing (STOC '09), pp. 169-178. ACM, 2009. [Gentry] is incorporated herein by reference in its entirety. Broadly, in HE, calculations may be performed on encrypted values, to produce results that are the same, after decryption, as if the calculation had been performed on corresponding plaintext values. HE provides for the application of an arithmetic circuit to a set of ciphertexts and the result is an encrypted value that would be the same as if it had been evaluated on the underlying plaintext. To be considered fully homomorphic, the encryption scheme allows for computations using arbitrary functions and is capable of evaluation of any circuit.

He enables to perform almost any operation using sensitive data or secret cryptographic keys without exposing them to an attacker, as long as the data remain encrypted in the homomorphic domain.

However, current performance level of HE schemes is low. Computation time and available memory required for performing some operations in the homomorphic domain are too high to enable a practical secure implementation on existing user devices.

In addition, operations performed in the homomorphic domain have the drawback of increasing the noise level of the encrypted data to which the operations are applied. At some point, noise in the encrypted data may become so high that the data hidden in ciphertexts cannot be retrieved anymore.

In order to cope with this issue, an operation called "bootstrapping" has been introduced by Gentry which enables to lower the noise level in the HE-encrypted data, enabling subsequent operations in the homomorphic domain to be applied to such encrypted data. Nevertheless, bootstrapping process comes with a high computational price. Therefore, it remains difficult to get practical implementations of intensive computations in the homomorphic domain, especially for devices with reduced resources.

Therefore, there is a need for an implementation of HE, and an associated device, enabling to perform intensive computations in the homomorphic domain while copping with the issue of increasing noise level of the HE-encrypted data, at a lower cost.

### SUMMARY OF THE INVENTION

For this purpose and according to a first aspect, this invention therefore relates to a method of secure performing, by a system comprising a processing unit and a secure element and on request by a requesting device, at least one processing operation and a function whose execution by the processing unit in the homomorphic domain does not fulfill a predetermined criterion, said method comprising :
- performing, by said processing unit, said at least one processing operation, in the homomorphic domain, on data encrypted using a homomorphic encryption algorithm, to generate first ciphertexts,
- determining by said processing unit that execution of said function taking as inputs said first ciphertexts is to be outsourced to said secure element,
- sending to said secure element said generated first ciphertexts and said function,
- decrypting said first ciphertexts into first cleartexts by said secure element,
- applying said function to said first cleartexts by said secure element to generate a second cleartext.

Such a method enables to perform securely most of the computation process on the processing unit while preventing any increase of the noise level in encrypted data above a predetermined level. It also prevents an unacceptable increase of the computation cost due to the execution of functions whose execution time or memory footprint for example would be too high in the homomorphic domain.

The function whose execution by the processing unit in the homomorphic domain does not fulfill a predetermined criterion may be a function having an execution time by the processing unit in the homomorphic domain greater than a predetermined threshold.

Outsourcing the execution of such a function to the secure element enables to avoid an execution exceeding an acceptable execution time.

The function whose execution by the processing unit in the homomorphic domain does not fulfill a predetermined criterion may alternatively be a function for which an acceptable delay between the beginning of its execution and the availability of the result of its execution at the secure element is lower than a predetermined threshold depending on a transmission time from the processing unit to the secure element.

When the result of the execution of such a function is awaited at the secure element, the execution of such a function by the processing unit would lead to results arriving too late at the secure element. In such a case, outsourcing it to the secure element enables to avoid a long transmission time of the function result between the processing unit and the secure element and makes the result available at the secure element much faster after the execution of the function.

The function whose execution by the processing unit in the homomorphic domain does not fulfill a predetermined criterion may also be a function whose execution is only allowed on a device fulfilling a predetermined security level and wherein the secure element fulfills said predetermined security level and the processing unit fulfills a security level lower than said predetermined security level.

In such a case, outsourcing the execution of the function to the secure element enables to guarantee that the required security level will be enforced.

The predetermined criterion may be a maximum size of the first ciphertexts.

In such a case the first ciphertexts to be used as inputs to the execution of the function have a size that is too large, due to their homomorphic encryption. Outsourcing the execution of the function to the secure element enables to decrypt the first ciphertexts in cleartext before the execution of the function, which leads to a much lower memory footprint of the execution of the function.

The method according to the first aspect may comprise :
- encrypting by said secure element said second cleartext to generate a second ciphertext,
- sending said second ciphertext to said processing unit or to said requesting device or to another processing unit of the system.

By doing so, the computation may be resumed on the processing unit in the homomorphic domain, after the execution of the function. The result of the execution of the function may also be sent to another recipient, encrypted in a way such that this recipient will be able to decrypt it.

Said function may perform an equality test, a comparison or a decision tree algorithm.

Said function may be encoded as bytecode and encrypted using an encryption algorithm.

It enables to make the content of the function unreadable outside the secure element.

The HE encryption algorithm may be a TFHE scheme and the processing unit may send to said secure element said generated first ciphertexts and said function packed in the information bits of an integer packet of a predetermined size.

By doing so, the encrypted function cannot even be distinguished from the first ciphertexts

Said requesting unit may be said secure element or a distant server.

Said secure element may be among a Hardware Security Module (HSM), a Tamper Resistant Enclave (TRE), an eSE, a Sim, an eSim, an iSim, a Trusted Execution Environment (TEE), a Confidential Computing (CC) device.

According to a second aspect, this invention therefore relates also to a computer program product directly loadable into the memory of at least one computer, comprising software code instructions for performing the steps of the methods according to the first aspect when said product is run on the computer.

According to a third aspect, this invention therefore relates also to a system comprising a processing unit and a secure element and configured for performing on request by a requesting device, at least one processing operation and a function whose execution by the processing unit in the homomorphic domain does not fulfill a predetermined criterion wherein:
- said processing unit is configured for:
   - performing on request by a requesting device at least one processing operation, in the homomorphic domain, on data encrypted using a homomorphic encryption algorithm, to generate first ciphertexts,
   - determining that execution of said function, taking as inputs said first ciphertexts, is to be outsourced to said secure element,
   - sending to said secure element said generated first ciphertexts and said function,
- said secure element is configured for:
   - decrypting said first ciphertexts into first cleartexts,
   - applying said function to said first cleartexts to generate a second cleartext.

According to a fourth aspect, this invention therefore relates also to a processing unit of said system according to the third aspect configured for performing on request by a requesting device, at least one processing operation and a function whose execution by the processing unit in the homomorphic domain does not fulfill a predetermined criterion and comprising a memory and a processor configured to perform at least one processing operation, in the homomorphic domain, on data encrypted using a homomorphic encryption algorithm, to generate first ciphertexts, to determine that execution of said function, taking as inputs said first ciphertexts is to be outsourced to a secure element, and an interface to send to said secure element said generated first ciphertexts and said function..

According to a fifth aspect, this invention therefore relates also to a secure element of said system according to the third aspect configured for performing on request by a requesting device, at least one processing operation and a function whose execution by the processing unit in the homomorphic domain does not fulfill a predetermined criterion and comprising a memory and a processor configured to decrypt said first ciphertexts into first cleartexts and to apply said function to said first cleartexts to generate a second cleartext.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system comprising a processing unit and a secure element according to an embodiment of the present invention;
- Figure 2 is a schematic illustration of a processing unit according to an embodiment of the present invention;
- Figure 3 is a schematic illustration of the main idea of the present invention;
- Figure 4 illustrates schematically a method of secure execution of the computation process according to an embodiment of the present invention;
- Figure 5 illustrates schematically a method of secure execution of the computation process according to an embodiment of the present invention.

### DETAILED DESCRIPTION OF EMBODIMENTS OF THE INVENTION

In the following paragraphs, the expressions "HE" or "homomorphic" used as adjectives are used to qualify data encrypted by an encryption operation of a Homomorphic Encryption scheme or to qualify operations performed on such encrypted data.

The invention aims at executing both securely and efficiently a computation process comprising at least one processing operation and the execution of a function whose execution in the homomorphic domain does not fulfill a predetermined criterion.

According to the method of the invention, the execution of this computation process is requested by a requesting device to a system 100 that comprises a processing unit and a secure element.

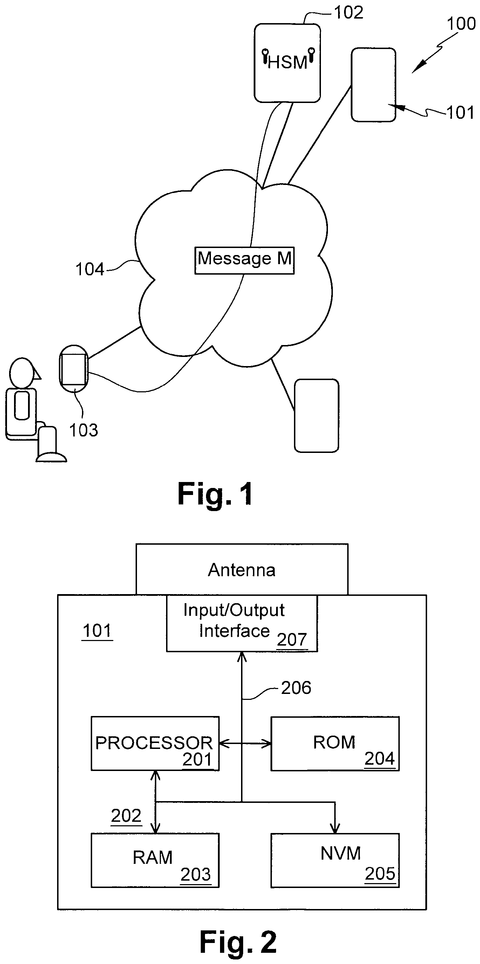

As shown on **Figure 1**, the processing unit 101, the secure element 102 and the requesting device 103 may be three separate devices connected by a network 104. As an example, the processing unit may be a server with large CPU and memory resources, the secure element may be a tamper resistant Hardware Security Module (HSM) or a Confidential Computing (CC) device connected to the processing unit, and the requesting device may be a remote device with lower resources than the processing unit such as a mobile telephone, a tablet, or a personal computer.

Alternatively, the system 100 may be a single device hosting both the processing unit and the secure element. In such a case, the system may be a digital device with computing means, such as a mobile phone or a computer and the secure element may be a Tamper Resistant Enclave (TRE), an eSE, a Sim, an eSim, an iSim or a Trusted Execution Environment (TEE).

In some embodiments, the requesting device may be the secure element itself.

**Figure 2** is a schematic illustration of a processing unit 101, for example, a mobile telephone, tablet, or personal computer. The processing unit 101 may include a processor 201 connected via a bus 202 to a random access memory (RAM) 203, a read-only memory (ROM) 204, and/or a non-volatile memory (NVM) 205. The processing unit 101 further includes a communication input/output interface 206 by which the processing unit 101 may be connected to the network 104. Such a communication interface may be used to connect the processing unit 101 to various forms of wireless networks, e.g., wide-area networks, WiFi networks, or mobile telephony networks. Alternatively, the processing unit 101 may connect to networks via wired network connections such as Ethernet.

The processing unit 101 may also include input/output means 207 providing interfaces to the user of the processing unit 101, such as one or more screens, loudspeakers, a mouse, tactile surfaces, a keyboard etc...

The method according to the invention aims at enabling the requesting device to take advantage of the processing power of the processing unit, and of interfaces of the system, for executing the computation process introduced here above. It may be needed for example to execute the computation process on the processing unit rather than on the secure element because the available memory on the secure element is insufficient or because a particular input/output interface is needed for executing a particular step of the computation process and is available only at the processing unit. In order to protect the data to be processed by the processing unit, the at least one processing operation comprised in the computation process shall be performed in the HE domain. Said data, to be used as input to the processing operation may be HE-encrypted by the requesting device and then transmitted, under an HE-encrypted format, to the processing unit. The encrypted data may be transferred to the processing unit through its interfaces: for example from a distant server through a network interface or from a more local device through an interface such as USB.

By doing so, the processing unit can perform the at least one processing operation without requiring any decryption of the HE-encrypted data, which ensures the confidentiality of the processed data. Neither the processing unit, nor any attacker which would gain knowledge of the data processed by the processing unit or of any transmission between the processing unit and the requesting device, has the ability to access the processed data in cleartext.

As described above, HE computation have two major drawbacks : the increase of the noise in the processed data as HE computations are performed and the increase of the computation cost in the HE domain compared to similar computations in cleartext. Both may turn HE computing into an impractical solution for some processed combining multiple and/or heavy computations.

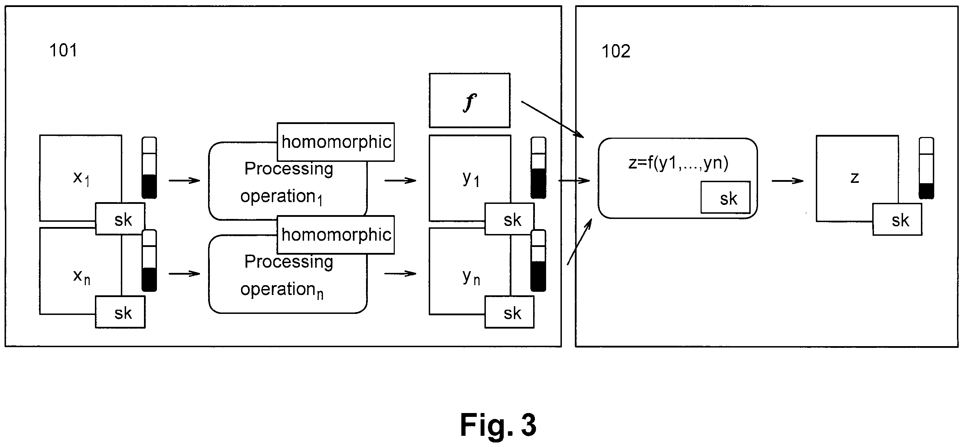

In order to solve this issue, as shown on **Figure 3**, the main idea of the invention is to offload the computation process from the processing unit to the secure element when a function F, whose execution by the processing unit in the homomorphic domain does not fulfill a predetermined criterion, has to be applied; to have this function F then executed by the secure element in cleartext; and to do so before the noise level in the data processed in the HE domain becomes too high.

By doing so, the execution of the function F by the secure element in cleartext instead of having it executed in the HE domain by the processing unit enables at the same time to decrease the execution cost of the function, and to reset the noise added to the processed data by the execution of the at least one processing operations in the HE domain by the processing unit. For these reasons, the invention is an alternative to existing solutions based on homomorphic computation accelerators which shorten the execution time of homomorphic computations but use for doing so dedicated circuits and therefore have a much higher cost.

As a first example, the function F whose execution by the processing unit in the homomorphic domain does not fulfill a predetermined criterion may be a function having an execution time by the processing unit in the homomorphic domain greater than a predetermined threshold. Similarly, the predetermined criterion may be a maximum size of the ciphertexts used as inputs to the function. In such cases, the cost of executing it in the homomorphic domain would be too high and is decreased by executing it in clear text in the secure element.

Alternatively, when the result of the execution of such the function F is awaited at the secure element, the execution of the function by the processing unit may lead to results arriving too late at the secure element because the time needed to transfer the results from the processing unit to the secure element. The function F may then be a function for which an acceptable delay between the beginning of its execution and the availability of the result of its execution at the secure element is lower than a predetermined threshold depending on the transmission time from the processing unit to the secure element. In such a case, outsourcing it to the secure element enables to avoid a long transmission time of the function result between the processing unit and the secure element and makes the result available at the secure element much faster after the execution of the function.

The function whose execution by the processing unit in the homomorphic domain does not fulfill a predetermined criterion may be a function whose execution is only allowed on a device fulfilling a predetermined security level and the secure element may fulfill this predetermined security level whereas the processing unit may fulfill a security level lower than the required security level.

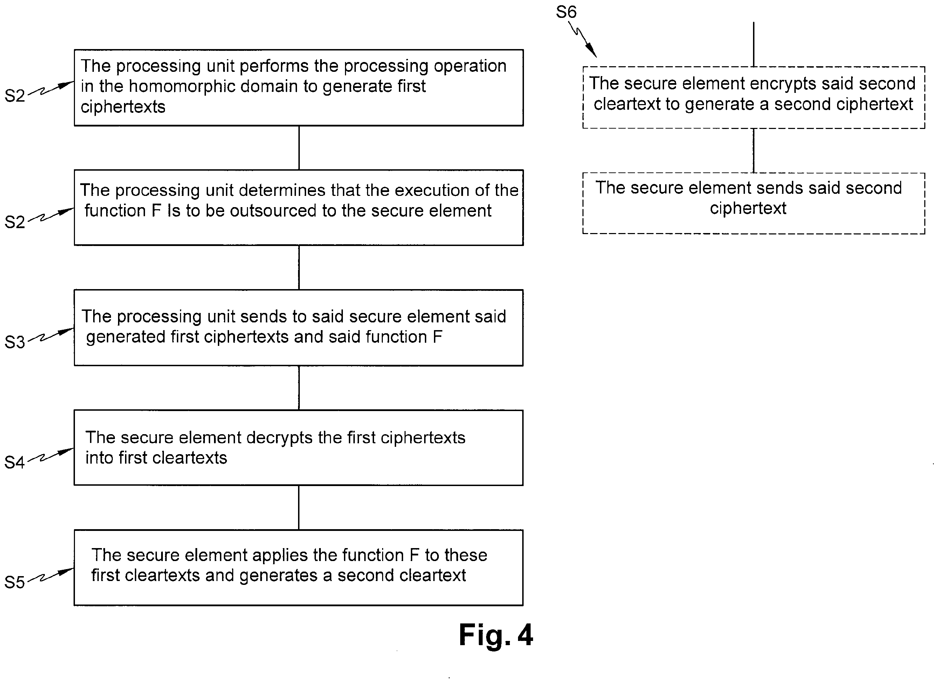

The following paragraphs describe the steps of a **method of secure execution of the computation process** performed by the system 100 according to a first aspect of the invention as depicted on **figure 4****.**

In a first step S1, the processing unit performs the at least one processing operation part of the computation process whose execution is requested by the requesting device. These processing operations are performed in the homomorphic domain, on data encrypted using a homomorphic encryption algorithm. This processing ultimately generates first ciphertexts, which are HE-encrypted.

The data used as input to the processing of this first step is transferred to the processing unit already HE-encrypted. Thanks to the properties of homomorphic encryption, the processing unit is able to apply a processing to this HE-encrypted data without any prior decryption; and the processing unit does not gain any knowledge of the processed data when it performs the one or more processing operations.

The HE-encrypted data may be provided by the requesting device, or by the secure element of the system when it is separate from the requesting device.

In a second step S2, the processing unit determines that it should outsource to the secure element the execution of the function F, taking as inputs said first ciphertexts.

In a first embodiment, the outsourcing of the execution of the function F is triggered by a command inserted in the code of the computation process at the time code compiling. It is indeed possible to predict in advance that when the execution of the computation process reaches the function F, it will need to stop being executed in the HE domain and will require an execution in cleartext by the secure element, both for fulfilling the predetermined criterion, and to decrease the noise level in the first cyphertexts. Such a command may be detected by the requesting device before the start of the execution of the computation process and the requesting device may instruct the processing unit to execute the processing operations of the computation process only up to the execution of the function F.

In another embodiment, the processing unit may assess itself the need for outsourcing the execution of the function F to the secure element, based on estimations of the compliance of the execution of function F in the HE domain with the predetermined criterion and of the noise level in the HE-encrypted data (the first ciphertexts) produced by the processing operations it has already executed.

In a third step S3, the processing unit sends to the secure element the generated first ciphertexts and the function F.

The function F may be encoded in different ways among the data transmitted by the processing unit to the secure element.

In a first embodiment, the function F is just specified by its name such that the secure element may look out for it in library using an API.

In a second embodiment, the processing unit sends to the secure element the code of the function F itself. The function F is then encoded as bytecode.

In addition, the function F may be encrypted using a secret key encryption algorithm such as AES, or a public key encryption algorithm such as RSA or ECC and using an encryption key such that the corresponding decryption key is stored at the secure element. By doing so, neither the processing unit nor any attacker intercepting the communication between the processing unit and the secure element may gain knowledge of what the function F really is. In order to conceal more efficiently the code of the function F, it may be HE-encrypted, for example using a TFHE scheme (Fast Fully Homomorphic Encryption over the Torus). By doing so, the encrypted code of the function F cannot even be distinguished from the first ciphertexts.

In the case of TFHE encryption (which is a RLWE - Ring Learning With Errors - based scheme), the data transferred from the processing unit to the secure element may be encoded as an integer packet of a predetermined size, divided into protection bits, noise bits and information bits. In such a case, the processing unit may send to the secure element the generated first ciphertexts and the function F code packed together in the information bits of the integer packet.

In a fourth step S4, the secure element decrypts the first ciphertexts into first cleartexts. By doing so, the noise generated in the first ciphertexts by the execution of the processing operations in the HE-domain is cancelled. If needed, the secure element may also decrypt the function F.

In a fifth step S5, the secure element applies the function F to these first cleartexts and generates a second cleartext.

At the end of the fifth step, the computing process may not be completed yet. Additional processing by the processing unit may be required. In such a case, in order to keep the processed data protected, such a processing should be performed again in the homomorphic domain. Therefore, during a sixth step S6, the secure element may HE-encrypt the second cleartext generated at the fifth step. Such an encryption may be a homomorphic encryption with the same encryption key as the one used to encrypt the encrypted data processed by the processing unit in the first step S1. It produces a second ciphertext. During the sixth step, the secure element may then send the second ciphertext to the processing unit 101, or to another processing unit of the system, such as a coprocessor.

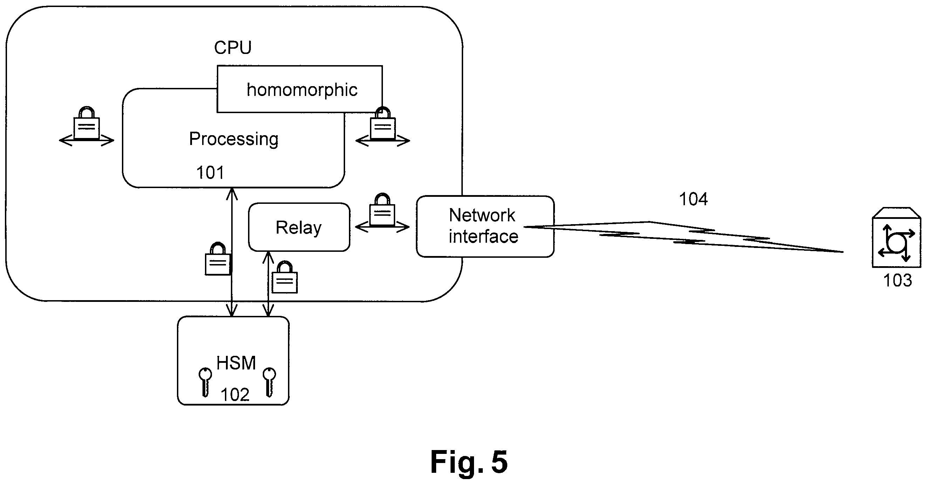

Alternatively, at the end of the fifth step, the computing process may be completed. In such a case, the second cleartext is the final result of the computing process. There may be a need to then export this result out of the secure element. In such a case, as shown on **Figure 5****,** during a sixth step S6, the secure element may encrypt the second cleartext and send it to the requesting device or a storage device. Such an encryption may be homomorphic or not. It may use an encryption key such that the corresponding decryption key is known by the requesting device. For sending data to the requesting device, the secure element may use interfaces of the processing unit, such as the communication interface 207, as a relay.

Therefore, the methods and devices according to the invention enable a secure implementation of the computation process, taking advantage of the resources and interfaces of the system outside of the secure element, without exposing the processed data outside of the secure element. It also enables to cope efficiently with the increase of the noise level in homomorphically encrypted data and with operations which might prove difficult to perform at a reasonable cost in the homomorphic domain.

It can be used to implement a solution for true Confidential Computing, enabling a secure device with low computing resources, such as a cloud HSM, to take advantage of online resources for performing heavy calculations, without disclosing any information about the processed data to the one or more processing units performing computations for the secure device.

It could also be used for implementing secure loT applications. IoT devices with a low security level, such as smartphones used as low cost point-of-sales, could be securely used to perform any operation without enabling an attacker to gain any information from reverse engineering of the loT device

## Claims

1. A method of secure performing, by a system (100) comprising a processing unit (101) and a secure element (102) and on request by a requesting device (103), at least one processing operation and a function whose execution by the processing unit in the homomorphic domain does not fulfill a predetermined criterion, said method comprising :
- performing (S1), by said processing unit, said at least one processing operation, in the homomorphic domain, on data encrypted using a homomorphic encryption algorithm, to generate first ciphertexts,
- determining (S2) by said processing unit that execution of said function taking as inputs said first ciphertexts is to be outsourced to said secure element,
- sending (S3) to said secure element said generated first ciphertexts and said function,
- decrypting (S4) said first ciphertexts into first cleartexts by said secure element,
- applying (S5) said function to said first cleartexts by said secure element to generate a second cleartext.

2. The method of claim 1, wherein the function whose execution by the processing unit in the homomorphic domain does not fulfill a predetermined criterion is a function having an execution time by the processing unit in the homomorphic domain greater than a predetermined threshold.

3. The method of claim 1 or 2, wherein the function whose execution by the processing unit in the homomorphic domain does not fulfill a predetermined criterion is a function for which an acceptable delay between the beginning of its execution and the availability of the result of its execution at the secure element is lower than a predetermined threshold depending on a transmission time from the processing unit to the secure element.

4. The method of any one of claims 1 to 3, wherein the function whose execution by the processing unit in the homomorphic domain does not fulfill a predetermined criterion is a function whose execution is only allowed on a device fulfilling a predetermined security level and wherein the secure element fulfills said predetermined security level and the processing unit fulfills a security level lower than said predetermined security level.

5. The method of any one of claims 1 to 4, wherein said predetermined criterion is a maximum size of said first ciphertexts.

6. The method of any one of claims 1 to 5, comprising :
- encrypting (S6) by said secure element said second cleartext to generate a second ciphertext,
- sending (S6) said second ciphertext to said processing unit or to said requesting device or to another processing unit of the system.

7. The method of any one of claims 1 to 6, wherein said function performs an equality test, a comparison or a decision tree algorithm.

8. The method of any one of claims 1 to 7, wherein said function is encoded as bytecode and encrypted using an encryption algorithm.

9. The method of claim 8, wherein the HE encryption algorithm is a TFHE scheme and the processing unit sends to said secure element said generated first ciphertexts and said function packed in the information bits of an integer packet of a predetermined size.

10. The method of any one of claims 1 to 9, wherein said requesting unit is said secure element or a distant server.

11. The method of any one of claims 1 to 10, wherein said secure element is among a Hardware Security Module (HSM), a Tamper Resistant Enclave (TRE), an eSE, a Sim, an eSim, an iSim, a Trusted Execution Environment (TEE), a Confidential Computing (CC) device.

12. A computer program product directly loadable into the memory of at least one computer, comprising software code instructions for performing the steps of any one of claims 1 to 11, when said product is run on the computer.

13. A system (100) comprising a processing unit (101) and a secure element (102) and configured for performing on request by a requesting device (103), at least one processing operation and a function whose execution by the processing unit in the homomorphic domain does not fulfill a predetermined criterion wherein:
- said processing unit (101) is configured for:
• performing on request by a requesting device at least one processing operation, in the homomorphic domain, on data encrypted using a homomorphic encryption algorithm, to generate first ciphertexts,
• determining that execution of said function, taking as inputs said first ciphertexts, is to be outsourced to said secure element,
• sending to said secure element said generated first ciphertexts and said function,
- said secure element (102) is configured for:
• decrypting said first ciphertexts into first cleartexts,
• applying said function to said first cleartexts to generate a second cleartext.

14. Processing unit (101) of said system of claim 13 configured for performing on request by a requesting device, at least one processing operation and a function whose execution by the processing unit in the homomorphic domain does not fulfill a predetermined criterion and comprising a memory (203,204,205) and a processor (201) configured to perform at least one processing operation, in the homomorphic domain, on data encrypted using a homomorphic encryption algorithm, to generate first ciphertexts, to determine that execution of said function taking as inputs said first ciphertexts is to be outsourced to a secure element, and an interface (206) to send to said secure element said generated first ciphertexts and said function.

15. Secure element (102) of said system of claim 13 configured for performing on request by a requesting device, at least one processing operation and a function whose execution by the processing unit in the homomorphic domain does not fulfill a predetermined criterion and comprising a memory and a processor configured to decrypt said first ciphertexts into first cleartexts and to apply said function to said first cleartexts to generate a second cleartext.
